# EUROPEAN PATENT APPLICATION

(11) **EP 1 858 198 A1**
(43) Date of publication of application: **21.11.2007**
(21) Application number: 06290824.9
(22) Date of filing: 19.05.2006
(51) Int. Cl.: H04L 12/24

(54) **Policy based telecommunications ad-hoc network and method**

(71) Applicant: FRANCE TELECOM, 75015 Paris (FR)
(72) Inventor: Reynolds, Paul, Easton, Wells BA5 1AT (GB); Hope, Stephen, Cheddat, Somerset BS27 3PG (GB)
(74) Representative: DeVile, Jonathan Mark

(57) **Abstract**

A telecommunications network is provided comprising a plurality of interconnected communications nodes, each of the communications nodes being connected to at least one of the other communications nodes in the telecommunications network via a communications channel. The communications nodes are arranged to communicate user data to and/or from the other communications nodes to which the communications nodes are connected in accordance with current operating communications parameters. Each of the communications nodes is adapted to communicate status report data to a policy control server, the status report data including an indication of the current operating communications parameters of the communications node and/or the communications channel via which the communications node. The policy control server is operable to determine, from the status report data, a current communications capability of the communications nodes , to identify a change in the operating parameters of one or more of the communications nodes or the communications channels, which could improve the performance of the telecommunications network and to communicate control data to the one or more communications nodes, the change control data indicating the identified change in the operating parameters. The policy control server can provide an improved allocation of network resources and network routing, because the policy control server is provided with a more global view of the telecommunications network. In one mode of operation the policy control server can re-configure the communications nodes and communications channels as a result of a failure of one or more of the nodes or channels.

## Description

### Field of Invention

The present invention relates to telecommunications networks which include a plurality of interconnected communications nodes, each of the communications nodes being connected to at least one of the other communications nodes in the telecommunications network via a communications channel. More particularly, the communications nodes are arranged in operation to communicate user data to and/or from the other communications nodes to which the communications nodes are connected in accordance with current operating communications parameters of the communications nodes and/or the communications channels.

### Background of the Invention

Telecommunications networks consist of nodes interconnected by communication channels via which information can be transmitted from one point to another. It is particularly desirable to have redundancy and adaptability built into such networks so that if a particular node or communication channel fails, the rest of the network may continue operating. Furthermore, if a better communication node with, for example, a higher bandwidth than current nodes is introduced, this node is used in favour of lower bandwidth nodes. Such an arrangement can allow for information that might otherwise have been routed through a low bandwidth node or which could otherwise not be communicated, to be routed via alternative communication channels or nodes.

Indeed it was a desire to have a flexible telecommunications network that would still operate even if large sections had been rendered inoperable that led to the development by the United States military of what is now known as the internet. Information communication in an internet works by data packets including an address in a header section, being transmitted across the internet by routing nodes called routers. The routers route the internet packets using a series of routing tables. The routing tables indicate to a router where to forward an internet packet based on the address within the header of the internet packet. If a node fails or a new, more efficient node is introduced, routing tables are updated in order to route the internet packets using the newly introduced node.

Another example of a network technology is ad-hoc networks. Ad-hoc networks consist of nodes which self configure the communications channels which communicate data within the network. Typically each node establishes a communication channel with any other node with which it can communicate. Therefore for a number of nodes, an "ad-hoc" network topology is created covering the area across which the nodes are distributed. Information may be passed from one node in the network to another node by "hopping" via intervening nodes.

One particular application of ad-hoc networks is for establishing communications between public safety and emergency service personal and equipment when pre-existing wide area communication equipment has been damaged or all such communications equipment is suffering a temporary overload. Various initiatives have been launched in order to further explore the potential of ad-hoc networks such as the European Telecommunications Standards Institute MESA Project. However, this has focused on a broadband network for public safety which is ideal for video applications but using the same broadband communications for every application is spectrally inefficient and potentially limits the operation range when higher frequencies have been selected.

Another technology which can be used to form ad-hoc networks is Software Defined Radio. Software Defined Radio provides a technique in which radio communications nodes are arranged to be configured so that they can communicate with one to another in accordance with a commonly agreed radio access interface standard.

Although currently proposed schemes for ad-hoc networks can provide a facility for interconnecting communications nodes and devices which otherwise form part of different communications networks there is a requirement for an improvement in co-ordination and configuration of such ad-hoc networks in order to use available communications resources as efficiently as possible.

### Summary of the Invention

According to the present invention there is provided a telecommunications network comprising a plurality of interconnected communications nodes, each of the communications nodes being connected to at least one of the other communications nodes in the telecommunications network via a communications channel. The communications nodes are arranged in operation to communicate user data to and/or from the other communications nodes to which the communications nodes are connected in accordance with current operating communications parameters of at least one of the communications node or the communications channel via which the communications node is connected to the other communications nodes. Each of the communications nodes is adapted to communicate status report data to a policy control server, the status report data including an indication of the current operating communications parameters of the communications node and/or the communications channel via which the communications node communicates the user data to other communications nodes. The status report may also include a representation of an observed communications capability of the other communications nodes to which that node is connected. The policy control server is operable to determine, from the status report data, a current communications capability of the communications nodes and/or the communications channels in the telecommunications network. The policy control server is then operable to identify a change in the operating parameters of one or more of the communications nodes or the communications channel using predetermined policy rules, which could improve the communication of user data by the telecommunications network, in accordance with the determined current communications capability of the communications nodes and/or the communications channels and predetermined policy control rules. The policy control server is operable to communicate control data to the one or more communications nodes, the control data indicating the identified change in the operating parameters.

Embodiments of the present invention can provide an improvement to the efficiency with which telecommunications networks communicate data, particularly, for example when there is a failure of one or more of the communications nodes or communications channels from which the telecommunications networks is comprised. A policy control server is provided, which is arranged to receive status report data from each of the communications nodes, reporting on current operating parameters of each of the communications nodes. The status report data may also provide an indication of current operating communications parameters of the communications channels via which data traffic is communicated between the communications nodes.

Having received the status report data from the communications nodes within the network, the policy control server is arranged to determine whether the communication of data via the telecommunications network can be improved by reallocating communications resources between the communications nodes. The reallocation of the communications resources can be effected by changing the current operating parameters of each of those communications nodes. The policy control server then determines control data which provides an indication of a command to be communicated to the communications nodes, the command being determined in accordance with policy rules of the policy control server. The policy control server then communicates the control data to the communications nodes which respond by adapting the operating parameters to make more efficient use of their communications resources.

As will be appreciated in some examples, the communications network may include a communications node or nodes which have not been adapted in accordance with the present invention to communicate the status report data to the policy control server. Such a communications node or nodes may form part of the communications network and other communications nodes which have been adapted to communicate the status report data to the policy control server may communicate via these communications nodes, without departing from the scope of the present invention.

Embodiments of the present invention can provide a signalling transport network, which is formed within the telecommunications network by providing a logical communications channel with a relatively low overhead and low data rate, compared to the communications channels which link the communications nodes, which otherwise are used in a conventional operation to communicate user data including signalling data. The signalling transport network can be established between the communications nodes using a simple protocol recognised by all the communications nodes. The signalling transport network is arranged to communicate the status report data and/or the control data to and from the policy control server from and to the communications nodes. The signalling transport network will find a particularly advantageous use in ad-hoc networks. There is no clearly established scheme allowing ad-hoc nodes to communicate with one another before a common communication protocol is established. The lack of such a scheme poses an obstacle to the co-ordination of the ad-hoc nodes prior to a common protocol being established. Co-ordination of ad-hoc nodes is advantageous in many respects, and in one respect co-ordination allows the ad-hoc nodes to establish and in some cases download the communication protocol (i.e. software defined radio scheme) to be used. Therefore an STN as provided by embodiments of the present invention will provide a scheme in which ad-hoc nodes using software defined radio can co-ordinate and download software defined radio schemes in order to establish a relatively full bandwidth ad-hoc network.

Furthermore, according to embodiments of the present invention the policy rules applied by the policy control server are arranged to determine an optimised or at least improved allocation of communications resources within the telecommunications network and to communicate that change using the change control data.

Various further aspects and features of the present invention are defined in the appended claims.

### Brief Description of the Drawings

Embodiments of the present invention will now be described by way of example only with reference to the accompanying drawings where like parts are provided with corresponding reference numerals and in which:
Figure 1 is a schematic diagram showing a network of communication nodes;
Figure 2 is a schematic diagram showing a network of nodes in which a policy control server has been implemented;
Figure 3 is a schematic diagram showing a simplified internet communications network in which a policy control server has been implemented;
Figure 4 is a schematic diagram showing a simplified internet network in which a distributed policy control server has been implemented;
Figure 5 is a schematic diagram showing an example of signal transport network (STN) packet;
Figure 6 is a schematic diagram showing an example of an ad-hoc network in which a policy control server has been implemented;
Figure 7 is an illustrative flow diagram showing the process by which data is transmitted between ad-hoc nodes and a policy control server in an ad-hoc network;
Figure 8 is a schematic diagram showing a simplified GSM location area; and
Figure 9 is a schematic diagram showing a simplified GSM location area in which a policy control server has been implemented; and
Figure 10 is a schematic diagram showing a general telecommunications network in which a policy control server has been implemented.

### Description of Example Embodiments

Consider the experiences of the US emergency services in dealing with the aftermath of hurricane Katrina in August 2005.

As floodwaters engulfed New Orleans, members of the emergency services were left with no choice but to ferry messages between communications points by foot. It is astonishing that a developed country, not unfamiliar with responding to natural disasters, would be reduced to relying on such primitive means of communication. The catastrophic failure of the communications infrastructure of New Orleans has been attributed to two principle factors: the rendering inoperable of the local electrical distribution and telecommunication systems, and the lack of interoperability of the communications equipment used by the various agencies involved in the emergency response. The net effect of these issues was that there were "islands of communication". Isolated groups were able to communicate with one another through simplex open channel voice communications, but they could not be co-ordinated at a regional or national level and had to resort to basic manual methods of communication i.e. sending runners. Therefore a deficiency has been identified in telecommunications networks that relates to the speed and efficiency with which changes within a telecommunications network are addressed and overcome.

### General Communications Network

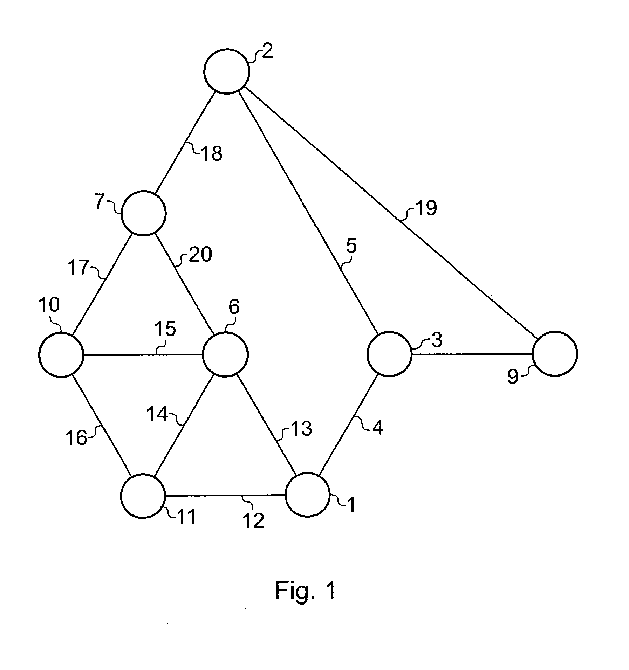

Figure 1 is a schematic diagram showing a general communications network in which communication nodes 1, 2, 3, 6, 7, 9, 10, 11 are connected by communications channels 4, 5, 12, 13, 14, 15, 16, 17, 18, 19, 20. Current operating communications parameters of the communications channels 4, 5, 12, 13, 14, 15, 16, 17, 18, 19, 20 may vary due to factors such as channel conditions and bandwidth capabilities. Similarly, the communications parameters of the communication nodes 1, 2, 3, 6, 7, 9, 10, 11 may vary due to factors such as processing performance and bandwidth capabilities. Further these communications parameters may vary over time, as a result of congestion or component failure.

If a communication session such as a video call, requiring the allocation of a high bandwidth, is to be established between an originating node 1 and a terminating node 2, a route between the two nodes 1, 2 is established using existing routing protocols. For example, the existing protocol may determine that the video call is routed via intermediate communication node 3 using an intermediate communication channel 4 and a second intermediate communication channel 5. However, if the intermediate communication node 3 fails, or for some reason it currently does not have a necessary bandwidth available to support the video call, the video call cannot be established.

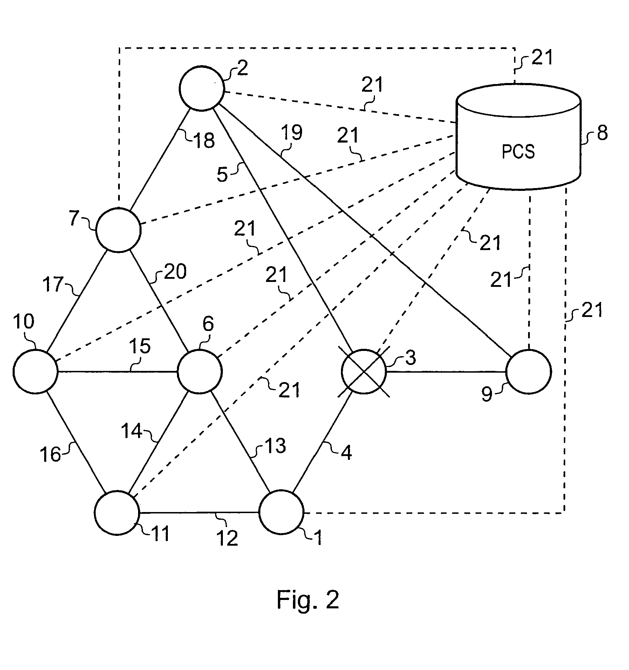

Figure 2 provides a schematic diagram of the general communications network of Figure 1 in which a policy control server 8 has been implemented. Each of the communication nodes 1, 2, 3, 6, 7, 9, 10, 11 is adapted to periodically send status report data indicating current operating parameters of the communications node and or the communication channel via which the communication node communicates to the policy control server 8. The status report data may be sent on a signalling transport network (STN) 21. The STN 21 might be a dedicated communication channel for signalling data to and from the policy control server 8. The STN 21 may be transmitted on a low bandwidth allocation of the communication channels 4, 5, 12, 13, 14, 15, 16, 17, 18, 19, 20 connecting the communication nodes 1, 2, 3, 6, 7, 9, 10, 11. When the example described in Figure 1 is applied to the network shown in Figure 2, the policy control server 8 will have been alerted to a drop in available bandwidth of the intermediate communication node 3 by a periodic status report data sent from intermediate communication node 3. Alternatively the absence of the periodic status report data from intermediate communication node 3 will indicate to the policy control server 8 that intermediate communication node 3 has failed. Upon detection of such a change in the operating parameters of communication node 3, the policy control server 8 is operable to update routing information of each communication node in accordance with predetermined policy rules. Therefore, in the case where it is no longer appropriate to route the video call through the intermediate communication node 3, the originating node 1 will route the video call through a more appropriate route, for example through a third intermediate communication node 6 and a fourth intermediate communication node 7, to the termination communication node 2.

### Predetermined Policy Rules

The predetermined policy rules may include rules relating to the design and operation of a particular implementation of a network within which a policy control server and STN are provided. For example rules may relate to:
- Traffic patterns - e.g. taking into account parts of a network which are likely to be subject to heavy traffic and at what times - lower traffic loads at night for example.
- Routing cost - e.g. accounting for the fact it may be more expensive to route data on certain channels, this may be particularly pertinent for mobile telecommunications networks.
- Reliability considerations - e.g. although a higher bandwidth routing may be available, it may be prone to fail more often than lower bandwidth but more reliable nodes.
- Commercial considerations - e.g. although higher bandwidth or more reliable routing may be available, it may be commercially more lucrative to route via alternate routes.
- Prioritisation - e.g. some nodes might be afforded a higher priority and access to more optimal routing for maybe either emergency requirements or because a higher level or service has been paid for.

### Internet Communication Network

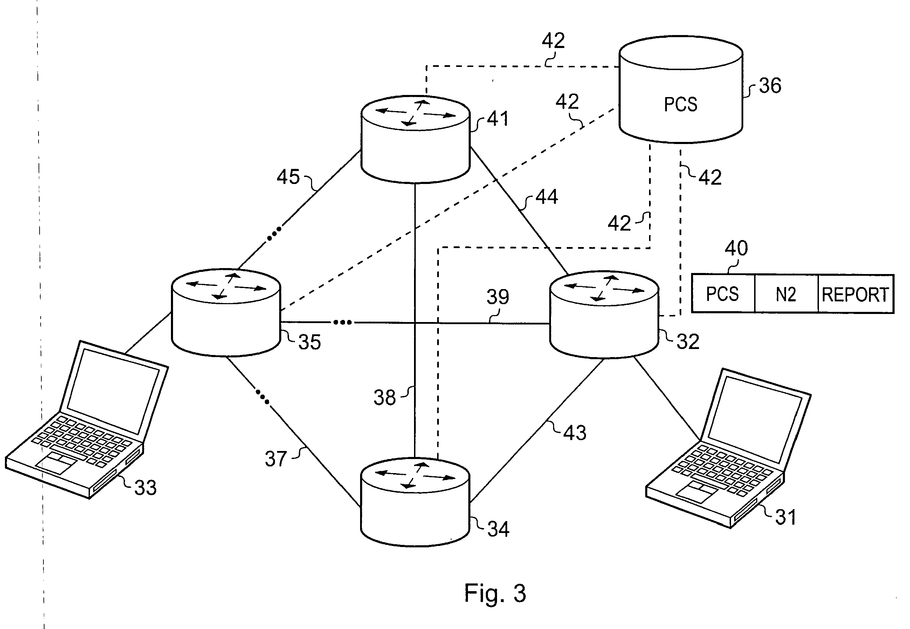

Figure 3 shows an example of a simplified internet communication network which includes a policy control server 36 according to the present technique. A number of internet routers 32, 34, 35, 41 are connected by a number of internet connections 37, 39, 43, 44, 45. A first terminal 31 is connected to a first router 32. If the first terminal 31 is to send a internet packet to a second terminal 33, the terminal 32 adds an address associated with the second terminal to the data packet. The data packet is then sent to the first router 32. The first router 32 then examines the address associated with the second terminal and compares this address with a routing table stored in the first router 32. The routing table specifies a next router 34 to which data packets addressed to the second terminal 33 must be sent. The first router 32 then forwards the data packet to the next router 34. This process of routers forwarding data packets by comparing the address associated with the second terminal with a routing table is repeated until the data packet arrives at a final router 35. The final router 35 then forwards the data packet to the second terminal 33.

In an internet communication network similar to that in Figure 3 except without the policy control server 36, the failure of the second router 34 will result in a loss of the data packet sent from the first terminal 31 addressed to the second terminal 33. The first router 32 will detect something is wrong when after a number of attempts, a data packet cannot be sent to second router 32. The first router 32 will adapt its routing table accordingly, for example sending the data packet via internet connection 39. However, for every router in the internet network to update its table takes a relatively long time, as the effect of the failure of the second router 32 is only detected by another router when it attempts to send a packet to it. Thus the updating of the routing tables of the routers 32, 34, 35, 41 "ripples" through the internet network. The routers 32, 34, 35, 41 in Figure 3 are operable to send periodic status report data packets 40 to the policy control server 36 via STN communication links 42. In figure 3 the STN links 42 are illustrative only and it will be appreciated they do not necessarily have to be physically distinct from the internet connections 37, 39, 43, 44, 45. The policy control server 36 is operable to form and maintain an optimised routing plan based on status report data which is collected from each of the routers 32, 34, 35, 41 and the terminals 31, 33. The optimised routing plan may be formed and adapted in accordance with predetermined policy rules. The optimised routing plan is sent to the routers 32, 34, 35, 41. The sending of the optimised routing plan might be on a periodic basis or when there has been a change in router availability. As a result, changes in the internet communication such as the failure, addition or reduction in bandwidth capability of a node may be compensated for more quickly than relying on the "ripple" based propagation of updated routing tables.

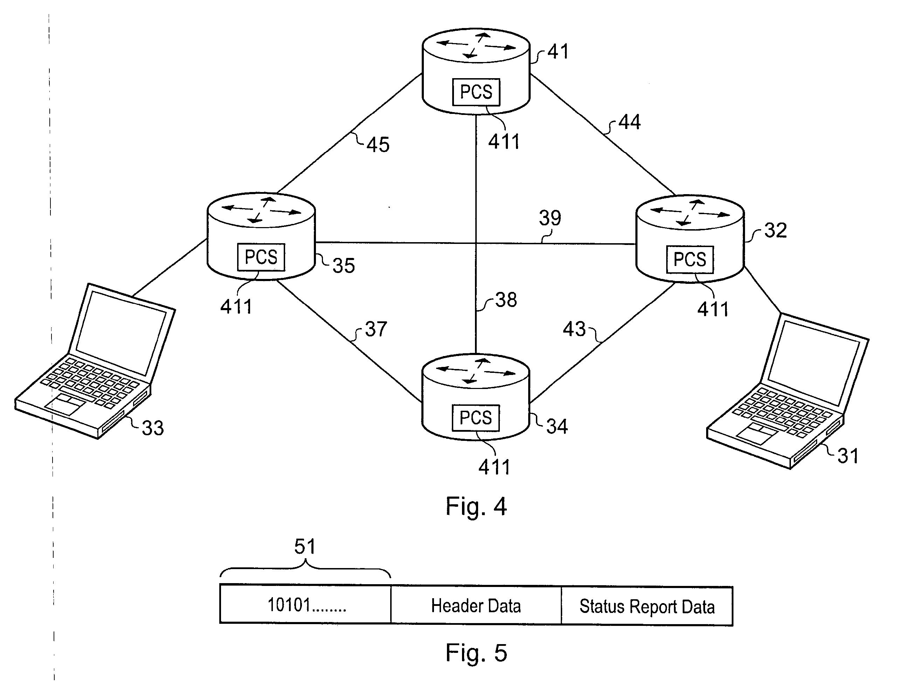

In one embodiment, shown in Figure 4, the internet communication network shown in Figure 3 is adapted so the functionality of the policy control server 411 is distributed and physically present in a number of routers 411. Despite this physical distribution of the policy server 411, the policy control server 11 maintains a single logical entity.

Figure 5 shows the status report data packets are sent from the routers with a STN identifier in a header portion of the status report data packets. The STN identifier might be a pre-defined pattern of bits 51, which any internet network entity will immediately recognise as a STN packet. STN packets may form a "virtual" low bandwidth dedicated communication channel forming the STN.

### Ad-hoc Communications Network

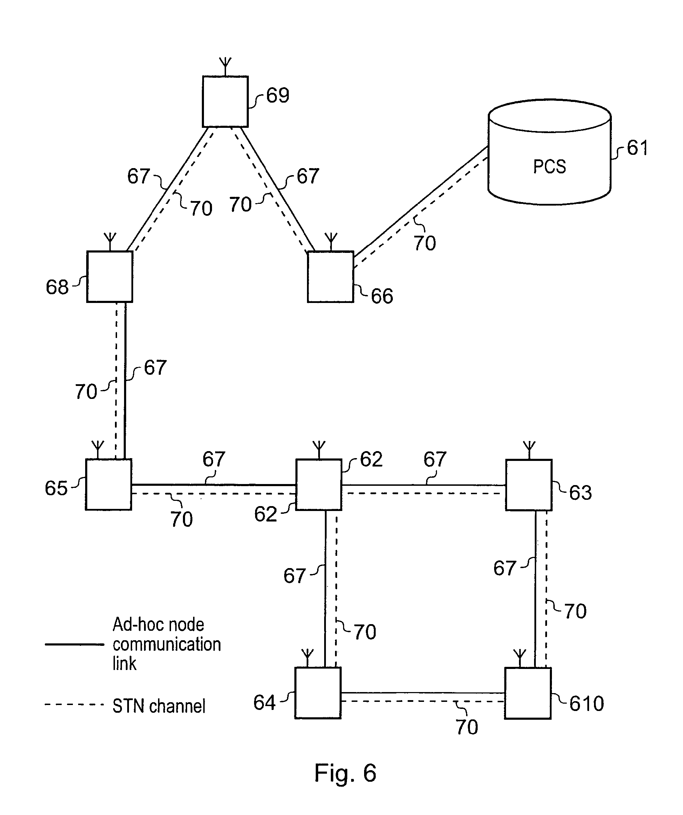

Figure 6 shows a simplified example of an ad-hoc network which includes a policy control server 61 in accordance with the present technique. In general, nodes forming an ad-hoc network are designed to self-configure to form the ad-hoc network. When an ad-hoc node joins an ad-hoc network, after being switched on for example, the ad-hoc node will initiate a "self-discovery" process in which the ad-hoc node establishes a communications channel between the ad-hoc node and other nearby ad-hoc nodes. In this way an arbitrary network topology is created. Information is transmitted between an originating ad-hoc node and a terminating ad-hoc node by the forming of an ad-hoc channel comprising a number of "hops" between intermediate ad-hoc nodes. However an arbitrarily formed ad-hoc network might lead to a non-optimal network topology. For example, because of the essentially random manner in which the ad-hoc network is established, points of congestion or "bottle necks" may occur. A bottle neck could occur for example at a point in which a first ad-hoc node has no choice but to route data through a second ad-hoc node that has a much lower bandwidth than that of the first node. This bottle neck might occur despite there being a more appropriate node available which has a high bandwidth.

When the ad-hoc nodes 610, 62 63, 64, 65, 66, 68, 69 in Figure 6 first join the ad-hoc network, they initiate a self discovery process. As a result of the self discovery process communication channels 70 are established between adjacent nodes. For example as shown in Figure 6 a first ad-hoc node 610, establishes communication channels 70 with a second ad-hoc node 63, a third ad-hoc node 64 and a fourth ad-hoc node 65. The communication channels 70 between the ad-hoc nodes are via a STN. The STN 70 in one example maybe a pilot channel which might be formed from a basic low bandwidth radio channel such as a defined guard band in a regulated frequency spectrum. Eventually at least one ad-hoc node 6 may undergo the self discovery process and establish a communications channel with the policy control server 61. The policy control server discovering ad-hoc node 66 is operable to propagate location information indicating a location of the policy control server 61 to any ad-hoc nodes 69 to which the policy control server discovering ad-hoc node has established a communication channel 70. The ad-hoc nodes 69 to which the policy control server discovering ad-hoc node has propagated the location information are also operable to propagate the location information to ad-hoc nodes 68 to which they are connected, and thus the location information identifying the policy control server 61 is propagated throughout the ad-hoc network.

Once an established ad-hoc node has received the location information, it is operable to send an operating parameters message via the STN to the policy control server 61 indicating the operating parameters of the established ad-hoc node, the operating parameters are requested using status report data which is communicated via the STN. The operating parameters status report data might include information regarding a different communications interface standard which is supported by the established ad-hoc node, bandwidth capabilities and information about the channel conditions of communication channels to other ad-hoc nodes in the ad-hoc network. Upon receipt of the operating parameters from the established ad-hoc node and other similar messages from other ad-hoc nodes in the ad-hoc network, the policy control server 61 is operable, in accordance with pre-defined policy rules to identify different communications interface standards being used by ad-hoc nodes in the ad-hoc network and determine from the different communications interface standards communications techniques which are common to each of the different communications interface standards. The policy control server 61 may then be operable to send control data, via the STN 70 directing the ad-hoc nodes to use the common communications technique to communicate the user data between the ad-hoc nodes. The control data might include data representing a software implementation of the communications technique, which the ad-hoc nodes implement. Upon receipt of the control data, the ad-hoc nodes in the ad-hoc network may then be operable to establish higher bandwidth communication channels between one another 67.

The policy control server 61 might also be operable to determine from the status report data providing the operating parameters, routing schemes representing an efficient route for transmission of data with particular data transmission requirements, the routing scheme are determined using predetermined policy rules, which take the operating parameters as input values and generate routing schemes for configuring the communication nodes and the communication channels. In this example, the policy control server 61 transmits the routing schemes to the ad-hoc nodes within the ad-hoc network, using commands via the STN. The ad-hoc nodes within the ad-hoc network might then be operable to route data according to the routing schemes provided by the policy control server.

Similarly to the internet communication network shown in Figure 4 in which the functionality of the policy control server is distributed, it will be appreciated that the functionality of the policy control server 61 in the ad-hoc communication network shown in Figure 6 might also be implemented in a distributed fashion amongst the ad-hoc nodes.

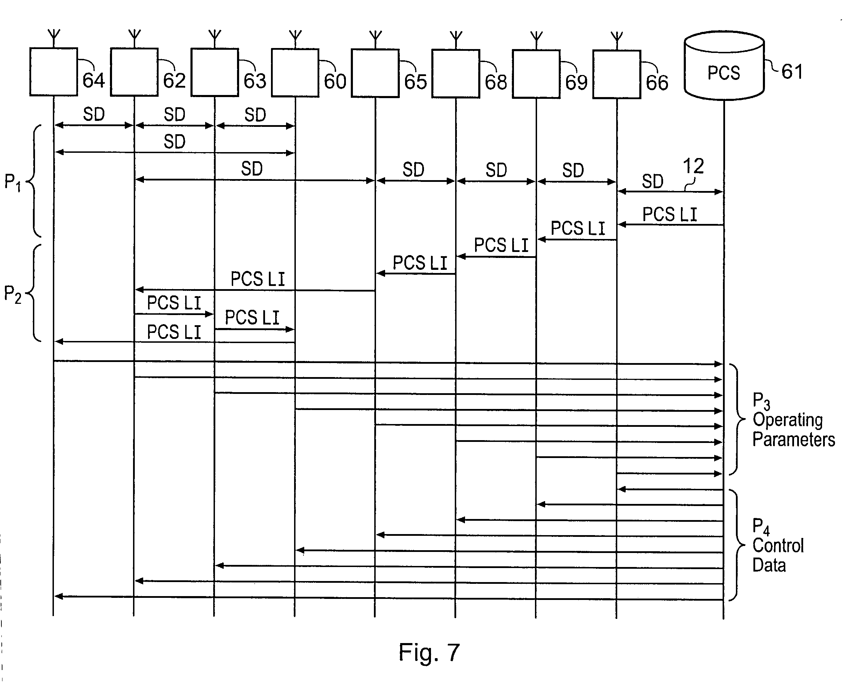

Figure 7 shows a flow diagram illustrating a process by which the ad-hoc nodes in the ad-hoc network self configure and establish communication with the policy control server 61. The ad-hoc nodes in Figure 7 correspond to those shown in Figure 6. During a first period P1, the ad-hoc nodes in the ad-hoc network undergo self discovery (SD) and establish a STN channel with adjacent ad-hoc nodes. This self discovery includes a self discovery process 12 at which the policy control server discovering ad-hoc node 6 discovers the policy control server 61. During a second period P2, policy control server 1 transmits location information via the STN to the ad-hoc nodes in the ad-hoc network. During third period P3, the ad-hoc nodes in the ad-hoc network transmit operating parameters to policy control server 61. During period P4, the policy control server transmits the control data to the ad-hoc nodes in the ad-hoc network. After the control data has been transmitted, the ad-hoc nodes in the ad-hoc network, may establish higher bandwidth communication channels between one another. Although not shown in Figure 3, it will be appreciated that an ad-hoc node will not transmit an operating parameter message directly to policy control server 61, but that the operating parameter message will be relayed via other ad-hoc nodes to the policy control server 61. This also applies to the control data sent from the policy control server 61, to the ad-hoc nodes in the ad-hoc network.

Once a network topology of high bandwidth communication channels between ad-hoc nodes has been established, the policy control server 6, may be operable to continue receiving operating parameters from the ad-hoc nodes in the ad-hoc network. The policy control server 61 may then be enabled to update continually the control data transmitted to the ad-hoc nodes in the ad-hoc network, adjusting the control data accordingly to changes in the ad-hoc network. Such changes might include new ad-hoc nodes joining the network and existing ad-hoc nodes leaving, failing or undergoing a change in operating parameters.

### Single Technology Network

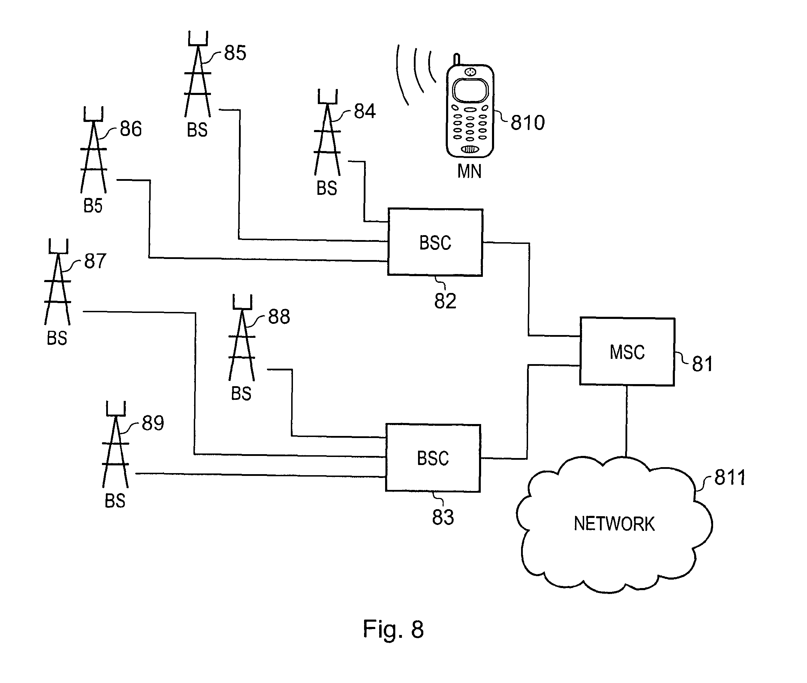

Figure 8 shows diagram providing an example application for a simplified GSM location area comprising the following network elements: a mobile switching centre (MSC) 81, two base station controllers (BSC) 82, 83 a number of base stations (BS) 84, 85, 86, 87, 88, 89, a mobile node (MN) 810 and a connection to a core network 811. Using the known GSM standard, there is a radio channel between the mobile node 810 and a base station 84 via which the mobile node communicates with the core network 811. The base station 84 is connected to a base station controller 82, and the base station controller 82 is connected to the mobile switching centre 81. The base station controller 82 is responsible for controlling the radio channel between the mobile node 810 and the base station 84. For example the base station controller 82 may initiate procedures which switch the radio channel from the base station 84 to a second base station 85, if channel conditions between the mobile node 810 and the base station 84 deteriorate.

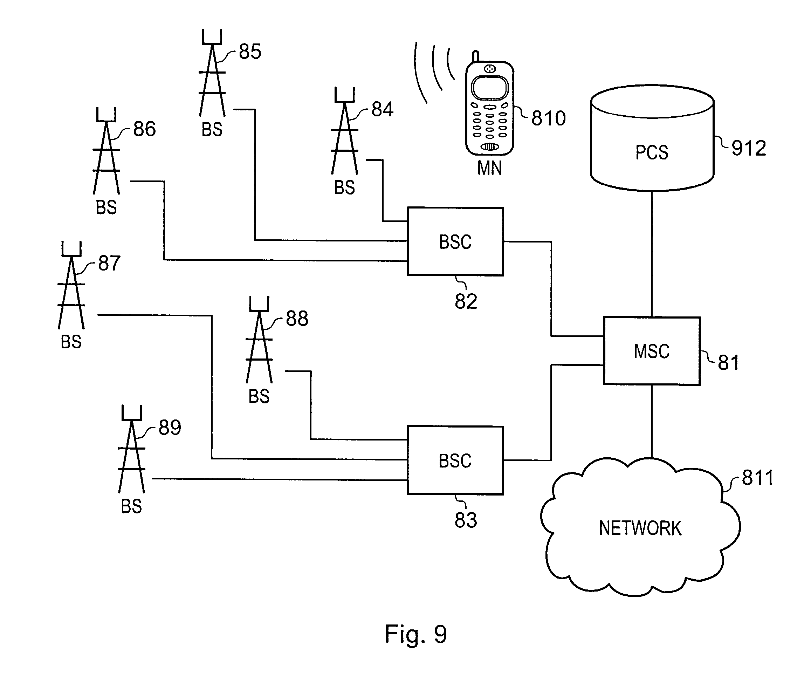

Figure 9 shows the simplified GSM location area of Figure 8 with a policy control server 912. In this example the policy control server is connected to the mobile switching centre 811, but it will be appreciated that the connection need not necessarily be at this point. Network elements comprising the GSM routing area may be operable to send periodic operating parameters to the policy control server on an STN using status reports. The STN might comprise a low bandwidth portion of a signalling channel provided in the known GSM standard for example. The policy control server 912 then determines an optimised network scenario for the location area based on the periodic operating parameters sent by the network elements. In the example described for Figure 8, the base station controller 82 initiates procedures which switch the radio channel from the base station 84 to a second base station 85, because channel conditions between the mobile node 810 and the base station 84 deteriorate. However, for a similar example applied to Figure 9, the policy control server 912 may for example determine from operating parameters received from the second base station 85, that radio channels to the second base station 85 have been susceptible to unstable channel conditions. In this case the policy control server 812 may be operable to indicate to the network elements in the location area, there may be a more optimal routing arrangement provided if the base station controller were to switch the radio channel to a third base station 86.

### Signalling Transport Network

As described above, a STN may be implemented along side a policy control server. The nature of the STN will vary depending on the type of network in which the policy server is operating. However, generally different implementations of STNs will have the same key features in relation to the network within which they are operating. To ensure an STN is always available over the full geographical range of any potential radio bearer technologies likely to be used within a communication network, it is envisaged that the STN might potentiality be a lower frequency out-of-band waveform compared with those which could potentially be instigated to support various broadband applications. For reduction of a noise floor and improved spectral efficiency, the STN could be turned off between communication nodes and control data passed through an in-band pilot channel between the communication nodes once a stable connection has been established or restored in the event of a communication channel or communication node failure.

Alternatively, a "global" STN could be achieved either by use of a signalling channel or a guard channel of a satellite system, (this might be a global positioning system (GPS) type satellite system as many modem handsets are GPS enabled) or by a packet switched network. It is envisaged that the global STN could potentially be an un-associated time slot (similar to CCIT No7 SS) to support various broadband applications. The global STN could be turned off between communication nodes and control data passed through an in-band pilot channel between the communication nodes once a stable connection has been established and restored in the event of a communication channel or communication node failure.

### Modes of Operation

In some embodiments the policy control server will operate in different modes. In a first mode, the policy control server operates to respond to a situation in which the telecommunications network is operating normally. In the first mode, the policy control server will be operable to determine a global view of the operating performance of the telecommunications network and to determine a change in the operating parameters of one or more of the communications nodes and/or the communications channels connecting the nodes to the effect of improving the use of communications resources. In another mode of operation the policy control server if predetermined conditions with the operation of the telecommunications network are satisfied such as a number of call attempts or detection of the failure of one or more of the communications nodes. In this mode, the policy control server will operate in a mode which corresponds with an emergency situation such as that which might occur when significant damage has been made to the telecommunications network. In this mode the policy control server will, in accordance with the policy control rules, determine an optimum routing of calls from communications terminals in accordance with a current communications capability of the communications nodes of the network which is determined from the status reports.

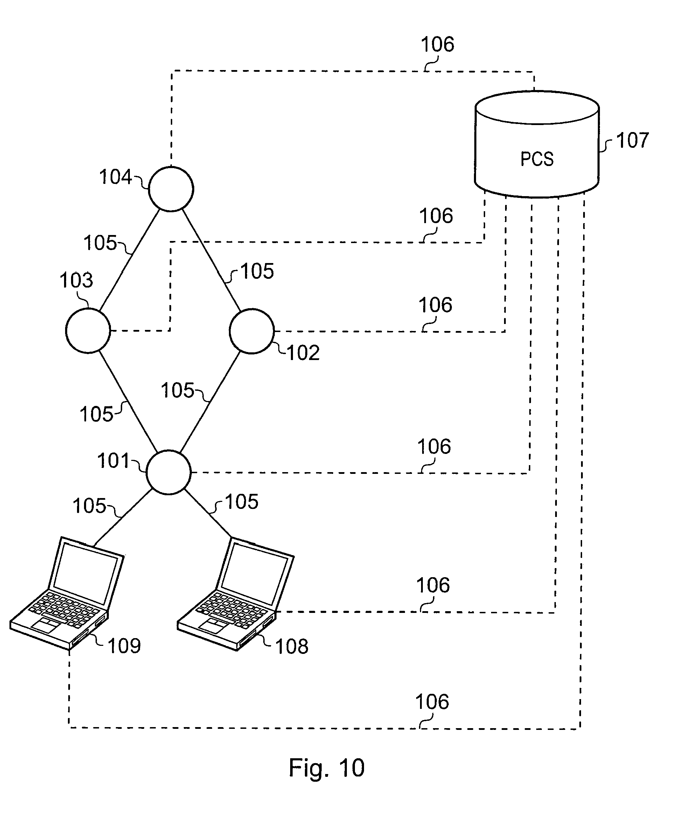

Embodiments have so far been described in terms of a policy control server and an STN providing an improvement in a telecommunications network adapting to a change in operating conditions in the network, such as for example the failure or addition of communication nodes. This may be considered to represent a mode of operation of the policy control server and STN. However, as explained above other modes of operation may be provided. Figure 10 provides a schematic diagram of a general telecommunications network in which a policy control server 107 is provided. Communication nodes 101, 102, 103, 104 and a first mobile terminal 108 and a second mobile terminal 109 are connected by communication channels 105 and STN 106. The network includes a high bandwidth communication node 103 and a low bandwidth node 102. In one mode of operation the policy control server 107 is operable to receive an emergency routing message from the first mobile terminal 108 via the STN 106. The emergency routing message may be sent from the first mobile terminal 108 if a higher priority must be afforded to data sent to and received by the first mobile terminal 108, for example in an emergency situation. Upon receipt of the emergency routing message, the policy control server 107 may be operable to adapt a routing scheme for affording a higher priority to data sent to and received by the first mobile terminal 108. The policy control server may also be operable to send out control data via the STN to the communication nodes 101, 102, 103, 104 and the mobile terminals 108, 109, so that the routing scheme is implemented in the telecommunications network. Therefore, if the first mobile terminal 108 and the second mobile terminal 109 are communicating with communication node 104, data sent to and from mobile terminal 108 might be sent via high bandwidth communication node 103 offering a high bandwidth and for example a guarantee of a low delay and thus a higher priority, whereas data sent to and from the second mobile terminal 109 will be sent via low bandwidth communication node 102 offering a lower priority.

In another mode of operation, a telecommunications network provided with a policy control server, could be arranged to have the policy control server operating as a background network function, forming and maintaining a continual optimal routing plan for the telecommunications network.

One skilled in the art will appreciate that the described modes of operation could be implemented in any of the previously described specific network technologies such as an internet communication network, an ad-hoc network or a GSM network.

Various further aspects and features of the present invention are defined in the appended claims. Various modifications can be made to the embodiments herein described without departing from the scope of the present invention. For example it will be appreciated that although embodiments of the invention have been described with reference to embodiments encompassing general ad-hoc networks, a general internet network and the GSM standard , the present invention could be realised using other communication network standards. For example, the general IP internet embodiment could be realise in IPv4 or IPv6 or any compatible future IP standard, the GSM embodiment may be realised in any telecommunications standard such as UMTS, GPRS or CDMA2000. Indeed, wireless network protocols such as WiFi, WiMax or Bluetooth would be particularly suitable. It will also be appreciated that the present invention could be realised in an embodiment which included many different communications standards.

## Claims

1. A telecommunications network comprising
a plurality of interconnected communications nodes, each of the communications nodes being connected to at least one of the other communications nodes in the telecommunications network via a communications channel, the communications nodes being arranged in operation to communicate user data to and/or from the other communications nodes in accordance with current operating communications parameters of at least one of the communications nodes or the communications channels via which the communications nodes are connected to others of the communications nodes, wherein each of the communications nodes is adapted
to communicate status report data to a policy control server, the status report data including an indication of the current operating communications parameters of the communications node and/or the communications channel via which the communications node communicates the user data,
the policy control server being operable
to determine, from the status report data, a current communications capability of the communications nodes and/or the communications channels in the telecommunications network,
to identify using predetermined policy rules a change in the operating parameters of one or more of the communications nodes or the communications channels, which could improve the communication of user data by in accordance with the determined current communications capability the communications nodes and/or the communications channels, and
to communicate control data to the one or more communications nodes, the control data indicating the identified change in the operating parameters.

2. A telecommunications network as claimed in Claim 1, wherein the communications nodes communicate the status report data to the policy server via a dedicated communications channel.

3. A telecommunications network as claimed in Claim 2, wherein the communications nodes communicate the status reports via the dedicated communications channel at regular intervals.

4. A telecommunications network as claimed in Claim 2 or 3, wherein the status report data is communicated via the dedicated communications channel at a substantially lower data rate than the data rate at which the user data is communicated, the dedicated communications channel providing a substantially lower communications bandwidth than the communications channels via which the user data is communicated.

5. A telecommunications network as claimed in any preceding Claims, wherein the communications channels between communications nodes are provided in accordance with different communications interface standards, and in response to the change in the communications capability of at least one of the communications nodes, the policy control server is operable
to identify each of the different communications interface standards,
to determine from the different communications interface standards communications techniques which are common to each of the different communications interface standards, and
to communicate the control data to the effect of directing the communications nodes to use the common communications techniques to communicate the user data between the communications nodes.

6. A telecommunications network as claimed in any preceding Claim, wherein the communications nodes include internet protocol routers, which are operable to communicate internet protocol packets via the communications channels, the user data being communicated in the internet packets in accordance with routing tables, and the policy control server is operable to determine a routing table, providing an improved routing of internet packets between the internet protocol routers in accordance with the status report data provided by the communications nodes, and to change the communications parameters associated with the operation of the at least one communications node and/or at least one communications link in accordance with the routing table.

7. A telecommunications network as claimed in any of Claims 1 to 5, wherein the plurality of communications nodes form part of a telecommunications system, which operates to communicate the user data to and/or from the communications terminals in accordance with a common telecommunications standard, each of the communications nodes being elements of the telecommunications system, the policy control server being operable
to receive the status report data from the elements of the telecommunications system, to determine an operational status of each of the elements of the telecommunications system,
to identify a change of the communications parameters of at least one of the telecommunications elements, which is required to improve communication of the user data from the status reports in combination with predetermined policy rules, and
to communicate the control data providing a change command to the communications node for changing the operating communications parameters.

8. A telecommunications network as claimed in any preceding Claim, wherein the policy control server comprises a plurality of separate parts, each of the elements being located in one of the communications nodes of the network.

9. A telecommunications network as claimed in any preceding Claim, wherein the policy control server is operable
to determine, from the status report data whether predetermined conditions have been met, which are representative of a failure of one or more of the communications nodes and/or one or more of the communications links, and
in response to the predetermined conditions being met, to generate command data for directing a change in the communications parameters of selected communications nodes and/or communications channels, to the effect of re-routing the user data, in accordance with the policy rules, and
to communicate the control data to the selected one or more communications nodes to effect the re-routing.

10. A telecommunications network as claimed in Claim 9, wherein in response to the predetermined conditions being met, the policy control server is operable
to receive requests from communications terminals for establishing a communications session,
to determine a route through the communications nodes of the telecommunications network, in accordance with the current operating communications parameters of the communications nodes and/or the communications channels and the policy rules, and
to generate the control data for communication to selected ones of the communications nodes for directing the communications nodes and/or the communications terminal to establish the communications session via the determined route, and
to communicate the control data to the selected communications nodes and/or the communications terminal.

11. A method of communicating using a telecommunications network, the telecommunications network comprising a plurality of interconnected communications nodes, each of the communications nodes being connected to at least one of the other communications nodes in the telecommunications network via a communications channel, the communications nodes being arranged in operation to communicate user data to and/or from the other communications nodes in accordance with current operating communications parameters of at least one of the communications node or the communications channel via which the communications nodes are connected to the other communications nodes, the method comprising
communicating status report data to a policy control server, the status report data including an indication of the current operating communications parameters of the communications node and/or the communications channel via which the communications node communicates the user data,
determining, from the status report data, a current communications capability of the communications nodes and/or the communications channels in the telecommunications network,
identifying according to predetermined policy rules a change in the operating parameters of one or more of the communications nodes or the communications channels, which could improve the communication of user data, in accordance with the determined current communications capability the communications nodes and/or the communications channels, and
communicating control data to the one or more communications nodes, the control data indicating the identified change in the operating parameters.

12. A policy control server arranged in operation to monitor a telecommunications network, the telecommunications network comprising a plurality of interconnected communications nodes, each of the communications nodes being connected to at least one of the other communications nodes in the telecommunications network via a communications channel, the communications nodes being arranged in operation to communicate user data to and/or from the other communications nodes in accordance with current operating communications parameters of at least one of the communications nodes or the communications channels via which the communications nodes are connected to others of the communications nodes, the policy control server being operable
to receive status report data from the communications nodes, the status report data including an indication of the current operating communications parameters of the communications node and/or the communications channel via which the communications node communicates the user data,
to determine, from the status report data, a current communications capability of the communications nodes and/or the communications channels in the telecommunications network,
to identify a change in the operating parameters of one or more of the communications nodes or the communications channels, which could improve the performance of the telecommunications network, in accordance with the determined current communications capability the communications nodes and/or the communications channels and predetermined policy control rules, and
to communicate change control data to the one or more communications nodes, the change control data indicating the identified change in the operating parameters.

13. A method of providing policy control to monitor a telecommunications network, the telecommunications network comprising a plurality of interconnected communications nodes, each of the communications nodes being connected to at least one of the other communications nodes in the telecommunications network via a communications channel, the communications nodes being arranged in operation to communicate user data to and/or from the other communications nodes in accordance with current operating communications parameters of at least one of the communications nodes or the communications channel via which the communications nodes are connected to others of the communications nodes, the method comprising
receiving status report data from the communications nodes, the status report data including an indication of the current operating communications parameters of the communications node and/or the communications channel via which the communications node communicates the user data,
determining, from the status report data, a current communications capability of the communications nodes and/or the communications channels in the telecommunications network,
identifying using predetermined policy rules a change in the operating parameters of one or more of the communications nodes or the communications channels, which could improve the communication of the user data, in accordance with the determined current communications capability the communications nodes and/or the communications channels, and
communicating control data to the one or more communications nodes, the control data indicating the identified change in the operating parameters.

14. A computer program product providing computer executable code, which when loaded on to a computer performs the method according to Claim 12.

15. A communications signal representing a status report as communicated by the policy control server of Claim 11.
